# EUROPEAN PATENT SPECIFICATION

(11) **EP 1 338 853 B1**
(45) Date of publication and mention of the grant of the patent: **05.01.2011**
(21) Application number: 03003940.8
(22) Date of filing: 21.02.2003
(51) Int. Cl.: F24H 1/28, F24H 8/00

(54) **Thermal station with one or more highly-efficient gas-operated boilers**
Wärmewerk mit einem oder mehreren Brennwertkesseln
Central thermique avec une ou plusieurs chaudières à haut rendement

(30) Priority: 25.02.2002 IT MI20020370
(43) Date of publication of application: 27.08.2003
(73) Proprietor: Carbofuel S.r.l., 20122 Milano (IT)
(72) Inventor: Carpaneto, Giacomo, 20122 Milano (IT)
(74) Representative: Cicogna, Franco

(56) References cited:
- EP-A- 1 036 993
- CH-A- 687 938
- DE-A- 3 409 034
- FR-A- 2 420 087
- US-A- 4 329 943
- US-A- 4 900 245

## Description

### BACKGROUND OF THE INVENTION

The present invention relates to a modular element thermal station including gas-operated boilers.

As is known, heating systems for civil and industrial applications conventionally comprise variable-power boilers and, accordingly, it is necessary to provide by the makers a very broad range of boiler and burner types, so as to allow each said boiler to have a different rated power, to meet all the contingent requirements.

Thus, it should be apparent that such an approach involves very high manufacturing costs and, moreover, requires a large store for storing therein all the different power boilers to be conventionally used.

Yet another problem of the prior art solutions is that related to the thermal efficiency of the boiler, which is not always adapted to properly exploit, in a full manner, the fume heat power and, moreover, frequently polluting the encompassing environment.

The document CH-A-687 938 discloses a thermal station comprising a boiler including a gas burner designed for blowing an air and gas mixture into a flame splitter element arranged inside the boiler body.

The document EP-A-1 036 993 discloses the preamble of claim 1.

### SUMMARY OF THE INVENTION

Accordingly, the aim of the present invention is to overcome the above mentioned drawbacks, by providing a modular element thermal station having gas operated boilers, allowing to provide and use a single type of boiler, designed for meeting all of the user requirements, while assuring the different required heat power.

Within the scope of the above mentioned aim, a main object of the present invention is to provide such a thermal station, which, by exploiting in cooperation the most modern combustion and thermal exchange methods, is adapted to provide a very high efficiency while reducing polluting emissions to a very small environmental impact.

Such a thermal station can comprise a very sophisticated electronic control system, for controlling the operation thereof depending on the contingent instantaneous system requirements, thereby always optimizing the efficiency of the system itself.

Yet another object of the present invention is to provide such a modular element highly efficient thermal station, including gas operated boilers, which, owing to its specifically designed features, is very reliable and safe in operation.

According to one aspect of the present invention, the above mentioned aim and objects, as well as yet other objects, which will become more apparent hereinafter, are achieved by a modular element thermal station, according to claim 1.

### BRIEF DESCRIPTION OF THE DRAWINGS

Further characteristics and advantages of the present invention will become more apparent hereinafter from the following disclosure of a preferred, though not exclusive, of a modular element thermal station with highly efficient gas operated boilers, as illustrated, by way of an indicative example in the accompanying drawings, where:
Figure 1 is a schematic front elevation view of the thermal station according to the present invention, including four mutually connected boilers;

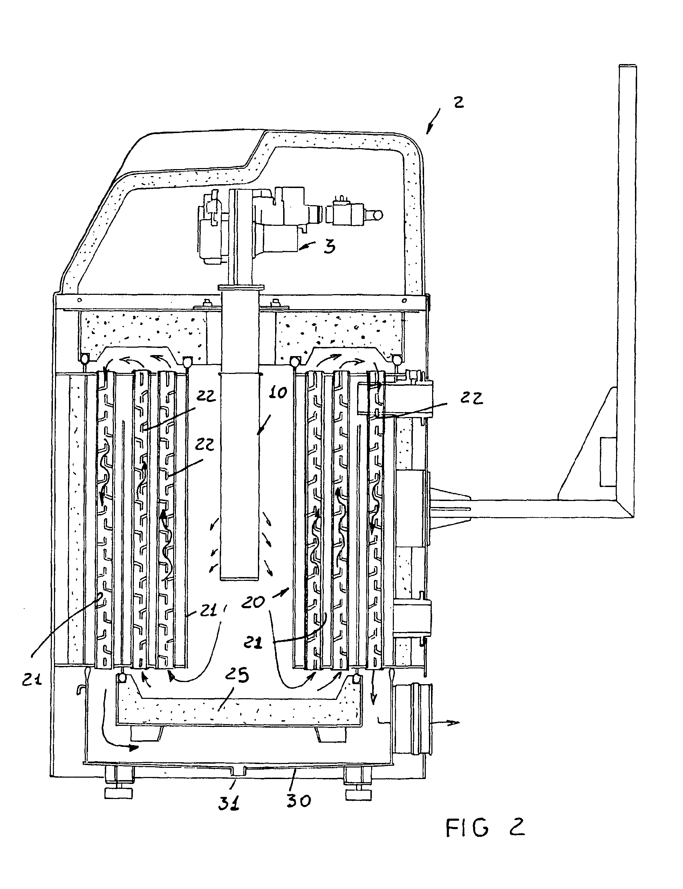

Figure 2 is a further schematic view, as cross-sectioned along a vertical plane, of a highly efficient boiler;

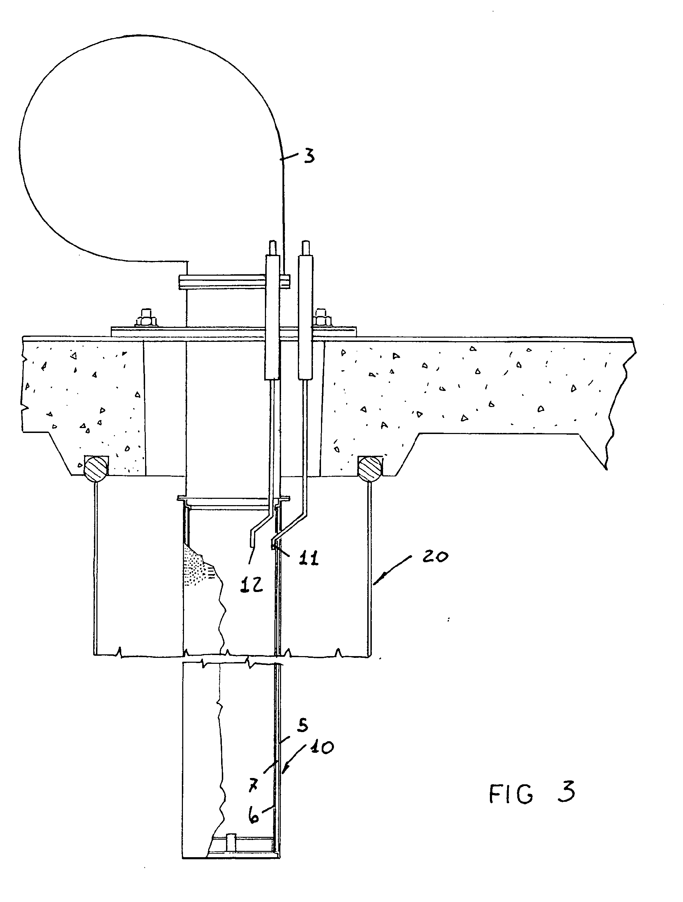

Figure 3 shows a detail of the lighting plug and of the flame detection probe or sensor;
   and
Figure 4 is a further schematic view, as partially broken away, illustrating the flame splitter sleeve element included in the thermal station according to the present invention.

### DESCRIPTION OF THE PREFERRED EMBODIMENT

With reference to the number references of the above mentioned figures, the thermal station, which has been generally indicated by the reference number 1, comprises one or more highly-efficient boilers 2, four in the specific embodiment being shown, which are advantageously of a condensation type.

Each boiler 2 comprises a burner 3, which is supplied by an air and gas mixture, with a moderately excessive air amount.

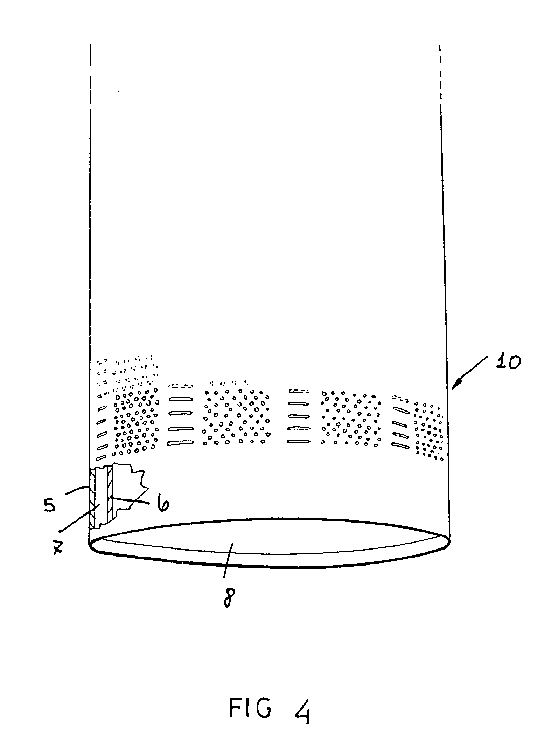

Said mixture is blown inside a flame splitter sleeve element 10 which, as is clearly shown in figure 4, comprises an outer shell or mantle 5 and an inner shell or mantle 6, defining therebetween a gap 7.

Said shells 5 and 6 are perforated through their surfaces, and are closed, at the bottom thereof, by a closing bottom element, generally indicated by the reference number 8.

Outside of the sleeve element 12 a lighting plug 11 is provided, designed for emitting sparks discharging on the outer shell of the sleeve element 10, thereby lighting the mentioned mixture.

An ionizing probe 12 is moreover provided, for detecting the flame presence, which, with the flame being absent, automatically shuts off the gas flow.

As shown, the mentioned sleeve element 10 is arranged inside a boiler body 20 which, practically, provides three fume turns, by ducts 21 including, on their surfaces, turbulators 22.

The ducts 21, in particular, are immersed in the thermal exchange fluid, which generally comprises water, and which operates for integrally take up the latent heat of the fumes to provide, at the third turn, a full recovery of the latent heat, with a condensation of the fume water steam, which will drop into a collecting basin 30, arranged at the bottom of the system, and including an outlet port 31.

For closing the region of the flame splitter sleeve element, a switching or deviating bottom element 25 is provided, said bottom element being made of a refractary material which practically operates to convey the fumes coming from the first fume turn toward the second fume turn, thereby providing an optimum channeling so designed as to prevent any types of dispersions.

The boiler is advantageously preferably made of a stainless steel material and, since it is of a condensation type, allows to fully recover the fume latent heat, while condensating the steam present therein.

This result is achieved owing to the provision of large thermal exchange surfaces and of specifically designed and shaped turbulators, provided inside the ducts 21 and owing to the provision of the water turns channeling the return water from the counter-current system, with respect to the fume flow.

The gas conveying tubes or ducts, and combustion chamber are vertically arranged, thereby downward discharging the condense, to minimize possible corrosions.

Another important aspect of the present invention is that the heat exchanger is provided with large heat exchange surfaces and with a comparatively high water contents.

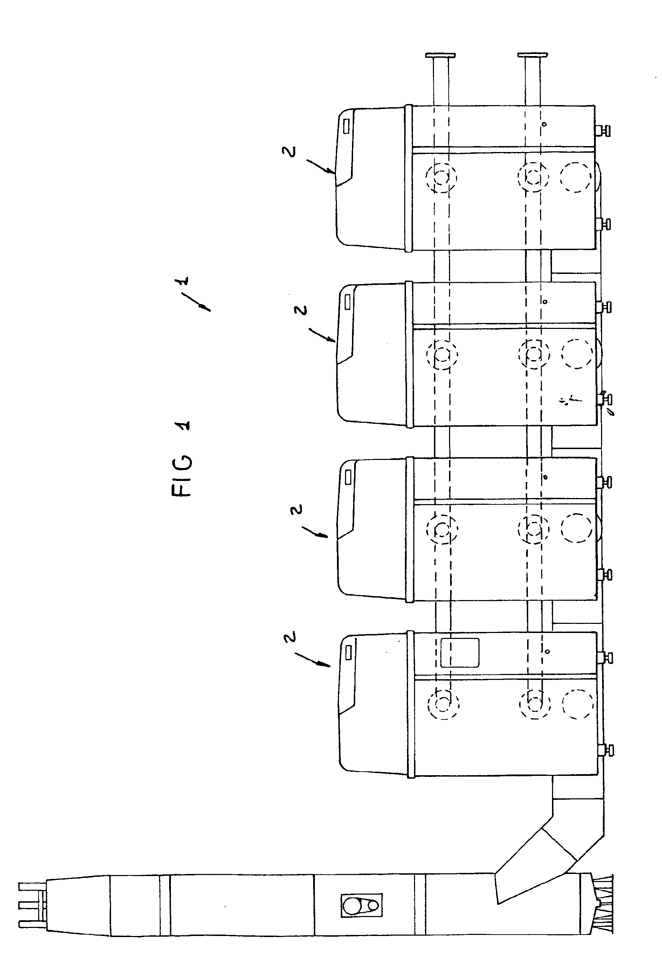

The boiler is advantageously made for an outside use, and it can be coupled, as is clearly shown in figure 1, to a plurality of other like boilers, having like configurations and features, to provide the total desired power.

Thus, the disclosed apparatus can operate in a power modulating type of operation, even of a single equipment, or system, with a constant air excess, set at a rated power.

The thermal station or assembly according to the invention, moreover, can operate in an outside environment, without any protection, owing to the evenness of the set parameters.

## Claims

1. A modular element thermal station (1) having a very high efficiency and emitting a very small amount of pollutants, comprising a plurality of series interconnected gas operated boilers (2), **characterized in that** each said boiler comprises, arranged with a vertical axis arrangement, a gas operated top burner (3) which is supplied by an air-gas mixture with a moderately excess air amount and blows said air-gas mixture into a flame splitter sleeve element (10) coupled to and vertically downward extending from said burner said sleeve element including an outer perforated sleeve shell (5) and an inner perforated sleeve shell (6) defining therebetween a sleeve gap (7), said sleeve shells (5, 6) being closed by a bottom closing element (8), outside of said sleeve element (10) a lighting spark plug (11) being provided for discharging sparks on said outer shell (5) of said sleeve element (10) and an ionizing probe (12) outside of said outer shell (5) for detecting the flame presence and switching off, if said flame is absent, said boiler having a boiler body (20) in which are arranged three fume turn ducts (21) for recovering latent heat while condensing water vapour said body encompassing said sleeve element (10) with a substantially concentrical relationship therewith, each of said fume ducts including a plurality of air turbulator elements (22), a switching bottom refractory material element (25) being moreover provided for conveying fumes coming from a first fume turn duct toward a second fume turn duct thereby preventing said fumes from being dispersed.

2. A thermal station, according to claim 1, **characterized in that** said gas turn ducts are immersed in a thermal exchange liquid.

3. A thermal station, according to claim 1, **characterized in that** said thermal station comprises moreover a condensate collecting basin (30), arranged at the outer of a third fume turn duct (21) and including an outlet port (31) therein.

4. A thermal station, according to one or more of the preceding claims, **characterized in that** said body (20) of said boiler (2) is made of a stainless steel material.

## Patentansprüche

1. Wärmewerkmodularelement (1) mit einem sehr hohen Wirkungsgrad und einem sehr geringen Ausstoß von Schadstoffen, mehrere in Reihe miteinander verbundene, gasbetriebene Kessel (2) umfassend, **dadurch gekennzeichnet, dass** jeder der Kessel einen gasbetriebenen, oberen Brenner (3) mit einer senkrechten Achsenanordnung umfasst, dem ein Luft-Gasgemisch mit einem moderaten Luftüberschuss zugeführt wird und der das Luft-Gasgemisch in ein Flammenteiler-Hülsenelement (10) bläst, das an dem Brenner angekoppelt ist und sich davon senkrecht nach unten erstreckt, wobei das Hülsenelement einen äußeren, durchbrochenen Hülsenmantel (5) und einen inneren, durchbrochenen Hülsenmantel (6) aufweist, die zwischen sich einen Hülsenspalt (7) definieren, wobei die Hülsenmäntel (5, 6) von einem unteren Verschlusselement (8) verschlossen sind und außerhalb des Hülsenelements (10) eine Zündkerze (11) zur Abgabe von Funken auf den äußeren Mantel (5) des Hülsenelements (10) vorgesehen ist und eine Ionisierungssonde (12) außerhalb des äußeren Mantels (5) vorgesehen ist, um das Vorhandensein der Flamme zu detektieren und abzuschalten, wenn die Flamme nicht vorhanden ist, wobei der Kessel einen Kesselkörper (20) aufweist, in dem drei Rauchwendekanäle (21) zur Rückgewinnung der latenten Wärme unter gleichzeitiger Kondensierung von Wasserdampf angeordnet sind, wobei der Körper das Hülsenelement (10) in einer dazu im Wesentlichen konzentrischen Beziehung umgibt, wobei die Rauchkanäle jeweils mehrere Luftverwirbelungselemente (22) aufweisen, und wobei außerdem ein unteres, feuerfestes Umlenkelement (25) vorgesehen ist, das den von einem ersten Rauchwendekanal kommenden Rauch in Richtung eines zweiten Rauchwendekanals leitet und dabei eine Zerstreuung des Rauchs verhindert.

2. Wärmewerk nach Anspruch 1, **dadurch gekennzeichnet, dass** die Rauchwendekanäle in eine Wärmeaustauschflüssigkeit eintauchen.

3. Wärmewerk nach Anspruch 1, **dadurch gekennzeichnet, dass** das Wärmewerk außerdem ein Kondensatsammelbecken (30) mit einer darin angeordneten Auslassöffnung (31) umfasst, das an dem äußeren eines dritten Rauchwendekanals (21) angeordnet ist.

4. Wärmewerk nach einem oder mehreren der vorhergehenden Ansprüche, **dadurch gekennzeichnet, dass** der Körper (20) des Kessels (2) aus einem rostfreien Stahlmaterial hergestellt ist.

## Revendications

1. Centrale thermique (1) à éléments modulaires à très haut rendement et émettant une très faible quantité de polluants, comprenant une pluralité de chaudières (2) fonctionnant au gaz et raccordées entre elles, en série, **caractérisée en ce que** chaque dite chaudière comprend, agencé dans un agencement d'axe vertical, un brûleur supérieur (3) fonctionnant au gaz qui est alimenté avec un mélange gaz-air, avec une quantité d'air en léger excès et insuffle ledit mélange gaz-air dans un élément de manchon sectionneur de flamme (10) couplé au dit brûleur et s'étendant verticalement vers le bas à partir de celui-ci, ledit élément de manchon incluant une paroi de manchon perforée extérieure (5) et une paroi de manchon perforée intérieure (6) définissant entre elles une ouverture de manchon (7), lesdites parois de manchon (5, 6) étant fermées par un élément de fermeture inférieur (8), à l'extérieur dudit élément de manchon (10) une bougie d'allumage (11) étant fournie pour faire des étincelles sur ladite paroi extérieure (5) dudit élément de manchon (10) et une sonde ionisante (12) à l'extérieur de ladite paroi extérieure (5) afin de détecter la présence de la flamme et d'éteindre, si ladite flamme est absente, ladite chaudière qui a un corps de chaudière (20) dans lequel sont agencés trois tuyaux munis de déviations pour les vapeurs (21) destinés à récupérer la chaleur latente tout en condensant la vapeur d'eau, ledit corps entourant ledit élément de manchon (10) en une relation sensiblement concentrique avec celui-ci, chacun desdits tuyaux pour vapeurs incluant une pluralité d'éléments générateurs de turbulence d'air (22), un élément commutateur inférieur en matériau réfractaire (25) étant en outre fourni pour transporter les vapeurs provenant d'un premier tuyau muni de déviations pour les vapeurs vers un deuxième tuyau muni de déviations pour les vapeurs en empêchant ainsi que lesdites vapeurs soient dispersées.

2. Centrale thermique selon la revendication 1, **caractérisée en ce que** les tuyaux munis de déviations pour les vapeurs sont immergés dans un liquide de transfert de chaleur.

3. Centrale thermique selon la revendication 1, **caractérisée en ce que** ladite centrale thermique comprend, en outre, un récipient de collecte des condensats (30), agencé à l'extérieur d'un troisième tuyau muni de déviations pour les vapeurs (21) et incluant un orifice de sortie (31).

4. Centrale thermique selon une ou plusieurs des revendications précédentes, **caractérisée en ce que** ledit corps (20) de ladite chaudière (2) est constitué d'un matériau en acier inoxydable.
